(19) Europäisches Patentamt

European Patent Office

Office européen des brevets

(11) **EP 4 005 745 A1**

(12) **EUROPEAN PATENT APPLICATION**
published in accordance with Art. 153(4) EPC

(43) Date of publication:
**01.06.2022 Bulletin 2022/22**

(21) Application number: **19944974.5**

(22) Date of filing: **11.09.2019**

(51) International Patent Classification (IPC):
**B25J 9/16** (2006.01)  **B23P 19/06** (2006.01)

(52) Cooperative Patent Classification (CPC):
**B23P 19/06; B25J 9/16**

(86) International application number:
**PCT/CN2019/105438**

(87) International publication number:
**WO 2021/046767 (18.03.2021 Gazette 2021/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Ltd., China**
**Chaoyang District**
**Beijing 100102 (CN)**

(72) Inventors:
 • **HUA, Tao**
  **Shanghai 200444 (CN)**
 • **XI, Baoshi**
  **Shanghai 200082 (CN)**
 • **WU, Jianqiang**
  **Shanghai 201100 (CN)**
 • **LI, Tao**
  **Shanghai 200129 (CN)**
 • **FU, Ling**
  **Shanghai 201208 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **AUTONOMOUS ROBOT TOOLING SYSTEM, CONTROL SYSTEM, CONTROL METHOD, AND STORAGE MEDIUM**

(57)    A vision-based autonomous robot tooling system, a control system, a control method, and a storage medium. The vision-based autonomous robot tooling system comprises: a vision subsystem (10), configured to acquire an image of a target workpiece; a robot subsystem (20), configured to control an operating end to execute a corresponding tooling operation; and a control subsystem (50), configured to control the vision subsystem (10) to acquire an image of the target workpiece, perform image recognition on the image of the target workpiece, generate, according to the obtained tooling information, corresponding robot control parameters, and control, according to the robot control parameters, the robot subsystem (20) to execute a corresponding tooling operation.

Fig. 5A

EP 4 005 745 A1

# Description

## Technical Field

The present invention relates to the industrial field, in particular to a vision-based autonomous robot tooling system, a vision-based autonomous robot tooling control system, a vision-based autonomous robot tooling control method and a computer-readable storage medium.

## Background Art

With the development of robot related technologies, robots have been widely applied in industrial applications such as handling, welding, stamping, spraying and transportation. Robots can flexibly be combined with different equipment to meet complicated production process requirements, realize multi-machine cooperative automatic production lines and digital factory layouts, economize the manpower to the greatest extent and improve the production efficiency.

However, robots need to be programmed to understand and strictly complete tasks. For example, for the application of screw fastening in a workpiece assembly, it is necessary to program the fastening procedure, including the fastening sequence of screws, the positions of screw holes, the screw pattern and the torque, and then a robot can repeat the pre-programmed procedure to fasten screws. When a new product design is introduced, it is necessary to program the fastening procedure again. It can be seen that in fields where new products need to be introduced frequently, for example, the electronic manufacturing field, reprogramming required each time a new product is introduced hinders the large-scale application of robots.

## Summary of the Invention

In view of this, in one aspect, a vision-based autonomous robot tooling system and a vision-based autonomous robot tooling control system are provided in the embodiments of the present invention, and in another aspect, a vision-based autonomous robot tooling control method and a computer-readable storage medium are provided so that a robot working platform can autonomously complete the assembly of a workpiece without any necessity of being re-programmed.

A vision-based autonomous robot tooling control system provided in the embodiments of the present invention comprises: an image acquisition module, configured to control a vision subsystem's acquiring an image of a target workpiece arranged on a workbench, an image processing module, configured to recognize the image of the target workpiece to obtain tooling information, a robot control module, configured to control a robot subsystem's performing a corresponding tooling operation, and a process management module, configured to control a vision subsystem's acquiring an image of a target workpiece by invoking the image acquisition module, recognize the image of the target workpiece by invoking the image processing module, plan corresponding robot control parameters according to the obtained tooling information, and control the robot subsystem's performing a corresponding tooling operation according to the robot control parameters by invoking the robot control module.

In one implementation mode, the tooling operation is screw assembly, the image processing module recognizes the image of the target workpiece to obtain tooling information including positions of screw holes, the robot control module controls a robot subsystem's moving a screwdriver mounted on the operating end of the robot subsystem to each target position, the system further comprises: a screw feeding control module, configured to control a screw feeding subsystem's supplying a screw to a corresponding position, and a screwdriver control module, configured to control the driving component of a screwdriver subsystem to realize the control of start/stop of the screwdriver and screw fastening with a corresponding torque, and the process management module controls a vision subsystem's acquiring an image of a target workpiece by invoking the image acquisition module, recognizes the image of the target workpiece to obtain tooling information including positions of screw holes by invoking the image processing module, plans robot control parameters including actual screw hole information and process parameters according to the tooling information, and according to the robot control parameters, controls a robot subsystem's, a screw feeding subsystem's and a screwdriver subsystem's cooperatively working to fasten screws at designated screw hole coordinates in accordance with screw fastening process parameters by invoking the robot control module, the screw feeding control module and the screwdriver control module.

In one implementation mode, the system further comprises a user interface, configured to display the working state of the vision-based autonomous robot tooling control system during running.

In one implementation mode, the process management module is further configured to acquire a process file and store the process file in a process library, wherein the process file contains tooling related part information, process parameters and part templates, and the image processing module performs part matching between the part templates in the process file and the image of the target workpiece in turn, and establishes a correspondence between the part position in the process file and the part position of the target workpiece to obtain tooling information after the matching degree meets the requirement.

In one implementation mode, predetermined workpiece type templates are further stored in the process library and the process file further contains workpiece information including workpiece type, and the image process module is further configured to perform image recognition and matching between the workpiece type templates in the process library and the image of the target workpiece, determine the type of the target workpiece according to the matching result, extract the workpiece type in the workpiece information and the process file corresponding to the type of the target workpiece from the process library according to the type of the target workpiece and then perform part matching between the part templates in the extracted process file and the image of the target workpiece in turn.

In one implementation mode, the process management module is further configured to acquire a production file corresponding to the original design, extract production process information including part information, process parameters and part templates from the production file, and export the production process information to a process file, or the process management module is further configured to receive a process file entered by the user and containing part information, process parameters and part templates.

A screw fastening system provided in the embodiments of the present invention comprises: a vision subsystem, configured to acquire an image of a target workpiece arranged on a workbench, a robot subsystem, configured to control an operating end's performing a corresponding tooling operation, and a control subsystem, configured to control the vision subsystem's acquiring an image of a target workpiece, recognize the image of the target workpiece, generate corresponding robot control parameters according to the obtained tooling information, and control the robot subsystem's performing the corresponding tooling operation according to the robot control parameters.

In one implementation mode, the tooling operation is screw assembly, the robot subsystem is configured to move a screwdriver mounted on the operating end of the robot subsystem to each target position, wherein the target positions include corresponding positions of screw holes of the target workpiece, the vision-based autonomous robot tooling system further comprises: a screwdriver subsystem, comprising a screwdriver mounted on the operating end of the robot subsystem and a driving component configured to drive the screwdriver, the driving component being able to control start/stop of the screwdriver and screw fastening with a corresponding torque, and a screw feeding subsystem, configured to supply a screw to a corresponding position, and the control subsystem is configured to control the vision subsystem's acquiring an image of a target workpiece, recognize the image of the target workpiece to obtain tooling information including positions of screw holes, generate robot control parameters including actual screw hole information and process parameters according to the tooling information, and control the robot subsystem's, the screw feeding subsystem's and the screwdriver subsystem's cooperatively working according to the robot control parameters.

In one implementation mode, the vision subsystem comprises: a camera arranged above the workbench and/or a camera arranged on the operating end side of the robot subsystem, and when the vision subsystem comprises a camera arranged on the operating end side of the robot subsystem, the control subsystem is further configured to control the robot subsystem's moving the camera arranged on the operating end side of the robot subsystem to each target position.

In one implementation mode, the control subsystem is the vision-based autonomous robot tooling control system in any of the above-mentioned implementation modes.

A screw fastening control method provided in the embodiments of the present invention comprises: controlling a vision subsystem's acquiring an image of a target workpiece, recognizing the image of the target workpiece and planning corresponding robot control parameters according to the obtained tooling information, and controlling a robot subsystem's performing a corresponding tooling operation according to the robot control parameters, wherein, the robot subsystem is configured to control an operating end's performing a corresponding tooling operation.

In one implementation mode, the tooling operation is screw assembly, recognizing the image of the target workpiece and planning corresponding robot control parameters according to the obtained tooling information comprises: recognizing the image of the target workpiece to obtain tooling information including positions of screw holes and generating robot control parameters including screw hole information and process parameters according to the tooling information, and controlling a robot subsystem's performing a corresponding tooling operation according to the robot control parameters comprises: according to the robot control parameters, controlling the robot subsystem's, a screw feeding subsystem's and a screwdriver subsystem's cooperatively working to fasten screws at designated screw hole coordinates in accordance with screw fastening process parameters, wherein the robot subsystem is configured to move a screwdriver mounted on the operating end of the robot subsystem to each target position, the target positions include corresponding positions of screw holes of the target workpiece, the screwdriver subsystem comprises a screwdriver mounted on the operating end of the robot subsystem and a driving component configured to drive the screwdriver, the driving component is able to control start/stop of the screwdriver and screw fastening with a corresponding torque, and the screw feeding subsystem is configured to supply a screw to a corresponding position.

In one implementation mode, the method further comprises: acquiring a process file and storing the process file in a process library, wherein the process file contains tooling related part information, process parameters and part templates, and recognizing the image of the target workpiece comprises: performing part matching between the part templates in the process file and the image of the target workpiece in turn, and establishing a correspondence between the part position in the process file and the part position of the target workpiece to obtain tooling information after the matching degree meets the requirement.

In one implementation mode, predetermined workpiece type templates are further stored in the process library, the process file further contains workpiece information including workpiece type, and before performing screw hole matching between screw hole templates in the process file and the image of the target workpiece in turn, the method further comprises: performing image recognition and matching between the workpiece type templates in the process library and the image of the target workpiece, determining the type of the target workpiece according to the matching result, and extracting the workpiece type in the workpiece information and the process file corresponding to the type of the target workpiece from the process library according to the type of the target workpiece.

In one implementation mode, the process file is a process file generated after production process information including part information, process parameters and part templates is extracted from the production file corresponding to the original design, or a process file entered by the user and containing part information, process parameters and part templates.

A further screw fastening control system provided in the embodiments of the present invention comprises at least a memory and at least a processor, wherein the at least one memory is configured to store a computer program, and the at least one processor is configured to invoke the computer program stored in the at least one memory to execute the vision-based autonomous robot tooling control method in any of the above-mentioned embodiments.

A computer-readable storage medium provided in the embodiments of the present invention stores a computer program and the computer program can be executed by a processor to realize the vision-based autonomous robot tooling control method in any of the above-mentioned embodiments.

From the above-mentioned solution, it can be seen that an image of a target workpiece is acquired, the image of the target workpiece is recognized, actual robot control parameters are planned according to the recognition result, and then robots or related devices are controlled to cooperatively work to complete the autonomous assembly of a workpiece on a robot working platform according to the robot control parameters.

A process file containing part information, process parameters and part templates is utilized to perform a template-based image recognition and part positioning for the image of the target workpiece, and thus the accuracies of the image recognition and part positioning can be improved.

Further, workpiece type templates are preset to perform a workpiece type recognition for the image of the target workpiece, and thus in the case of a plurality of workpiece types, the autonomous assembly of different types of workpieces can flexibly be realized.

In addition, the export of a process file directly from a production file corresponding to the original design, for example, a CAD file, can simplify the workload of the user, improve the accuracy of information in the process file and avoid errors resulting from manual inputs.

## Brief Description of the Drawings

Preferred embodiments of the present invention will be described in detail below by reference to the drawings so that those skilled in the art can have a clearer idea of the above-mentioned and other characteristics and advantages of the present invention.

Fig. 1A exemplarily shows the structure of a vision-based autonomous robot tooling system provided in the embodiments of the present invention.

Fig. 1B exemplarily shows the structure of the vision-based autonomous robot tooling system obtained in an embodiment of the present invention, where the tooling operation is screw fastening, for example.

Fig. 2A is a simplified schematic diagram of an image of a target workpiece in an example of the present invention.

Fig. 2B is an image of a screw hole already fastened by use of a screw in Fig. 2A.

Fig. 3 is a schematic diagram of a screw hole in one example of the present invention.

Figs. 4A and 4B are schematic diagrams of PCB workpiece type templates in one example of the present invention.

Fig. 5A is a schematic diagram of the structure of the control subsystem of the vision-based autonomous robot tooling system shown in Fig. 1.

Fig. 5B is a schematic diagram of the structure of the control subsystem obtained in an embodiment of the present invention, where the tooling operation is screw fastening, for example.

Fig. 6 is an exemplary flowchart of the vision-based autonomous robot tooling control method provided in the embodiments of the present invention.

Fig. 7 exemplarily shows the structure of another vision-based autonomous robot tooling control system provided in the embodiments of the present invention.

Description of reference numerals in the drawings:

| Reference numeral | Meaning |
| --- | --- |
| 10 | Vision subsystem |
| 20 | Robot subsystem |
| 30 | Screwdriver subsystem |
| 40 | Screw feeding subsystem |
| 50 | Control subsystem |
| 501 | User interface |
| 502 | Process library |
| 503 | Image acquisition module |
| 504 | Image processing module |
| 505 | Robot control module |
| 506 | Screw feeding control module |
| 507 | Screwdriver control module |
| 508 | Process management module |
| S62, S64, S66 | Steps |
| S71-S80 | Steps |
| 81 | Memory |
| 82 | Processor |
| 83 | Bus |

**Detailed Description of the Invention**

For the purposes of simplicity and intuitiveness of the description, a plurality of representative implementation modes are given below to describe the solution of the present invention. A large amount of details in the implementation modes are only used to help to understand the solution of the present invention. Obviously, the technical solution of the present invention is not limited to these details when implemented, however. To avoid unnecessarily confusing the solution of the present invention, some implementation modes are not described in detail, and only their frameworks are given. Below, the term "comprise" means "include but are not limited to" and the term "according to..." means "at least according to..., but not limited to only according to...". In view of the linguistic habits of Chinese, the number of a component hereinafter can be one or more or can be understood as at least one, unless otherwise specified.

In the embodiments of the present invention, in order to enable a robot working platform to autonomously complete the assembly of a workpiece without any necessity of being re-programmed, an image of a target workpiece is recognized in advance to acquire related tooling information, then actual robot control parameters, for example, an installation sequence of parts and process parameters, are planned according to the recognition result, and then robots or related devices are controlled to cooperatively work to complete the autonomous assembly of a workpiece on a robot working platform according to the robot control parameters.

To make clearer the technical solution and advantages of the present invention, the present invention is further described in detail below in combination with the drawings and embodiments. It should be understood that the specific embodiments described here are used only to illustrate the present invention, but not to restrict the scope of protection of the present invention.

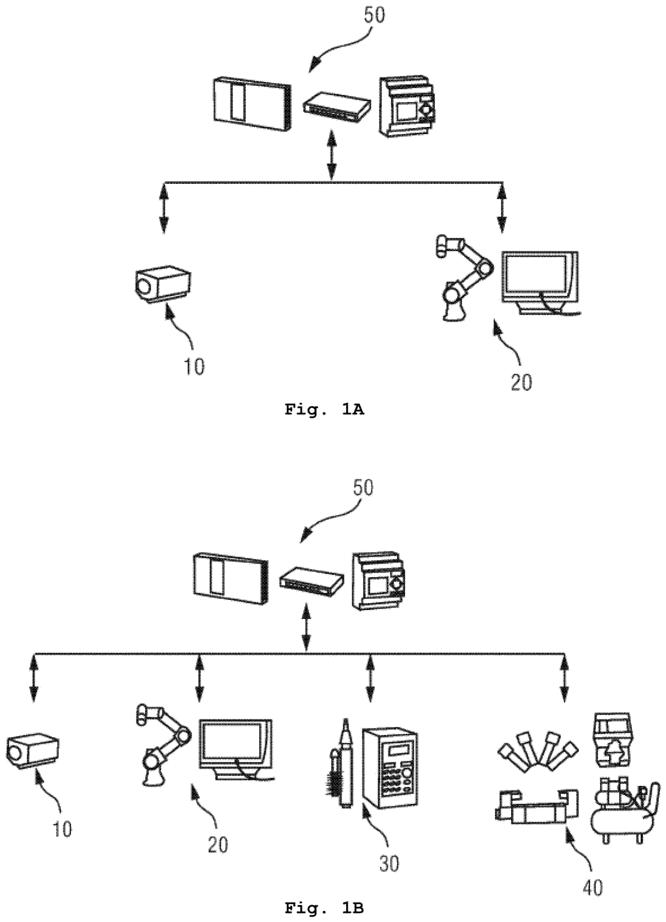

Fig. 1A exemplarily shows the structure of a vision-based autonomous robot tooling system (also known as vision-based autonomous robot working platform) provided in the embodiments of the present invention. As shown in fig. 1A, the system may comprise a vision subsystem 10, a robot subsystem 20 and a control subsystem 50.

The vision subsystem 10 is configured to acquire an image of a target workpiece arranged on a workbench.

The robot subsystem 20 is configured to control an operating end's performing a corresponding tooling operation.

The control subsystem 50 is configured to control the vision subsystem's acquiring an image of a target workpiece, recognize the image of the target workpiece, generate corresponding robot control parameters according to the obtained tooling information, and control the robot subsystem 20 or related device's performing the corresponding tooling operation according to the robot control parameters.

Fig. 1B exemplarily shows the structure of the vision-based autonomous robot tooling system obtained in an embodiment of the present invention, where the tooling operation is screw fastening, for example. As shown in Fig. 1B, the system may comprise a vision subsystem 10, a robot subsystem 20, a screwdriver system 30, a screw feeding subsystem 40 and a control subsystem 50.

Wherein, the vision subsystem 10 is configured to acquire an image of a target workpiece arranged on a workbench.

In the specific implementation, the vision subsystem 10 may comprise at least one camera. The at least one camera may comprise a fixed camera fixed on the rack of a screw fastening console, and/or a movable camera mounted on a robot arm (also known as manipulator), and the movable camera can move together with the end-effector of a robot. Wherein, the camera fixed on the rack may be mounted well above a workpiece, and for example, if the workpiece is a printed circuit board (PCB) in the electronic manufacturing field, the imaging plane of the fixed camera may be parallel to the working plane for screw fastening. To achieve a wider field of vision, the fixed camera may be placed in the highest position of the rack above the working plane. Since the movable camera mounted on the robot arm is closer to the working plane and has a narrower field of vision, the movable camera may be used when it is necessary to precisely position a screw hole. In one implementation mode, the fixed camera and the movable camera may be used together.

The robot subsystem 20 is configured to move a screwdriver mounted on the operating end of the robot subsystem 20 to each target position under the control of the control subsystem 50, wherein the target positions include corresponding positions of screw holes of the target workpiece. If a screw in the screw feeding subsystem 40 is drawn by the screw holder of the screwdriver from the screw feeder, the target positions may further comprise the position of the corresponding screw in the screw feeder. In addition, if a camera is mounted on the robot arm, the robot subsystem 20 can also move the camera to a position required by the control subsystem 50 under the control of the control subsystem 50 to help to realize precise screw hole positioning.

In the specific implementation, the robot subsystem 20 may be a robot arm with 4, 5 or 6 degrees of freedom or a SCARA robot.

The screwdriver subsystem 30 may comprise a screwdriver mounted on the operating end of the robot subsystem 20 and a corresponding driving component, for example, a motor. The driving component is able to control start/stop of the screwdriver and screw fastening with a corresponding torque under the control of the control subsystem 50.

The screw feeding subsystem 40 is configured to supply a screw to a corresponding position.

In the specific implementation, the screw feeding subsystem 40 may be an automatic feeding system or a suction/magnetic feeding system, for example, a vacuum accessory or a magnetic drill bit. The specific feeding mode may be flexibly selected according to the specific type of screws and the requirements of the user. Screws may be supplied through a supply hose. Or, the screw holder of the screwdriver may also take a screw out of the screw feeder by means of the pull of vacuum or a magnetic drill bit. The screw feeder guarantees that a screw is accurately arranged in a preset position. For example, in the specific implementation, the screw feeding subsystem 40 supplies the required screws to the screwdriver subsystem 30 through the supply hose under the control of the control subsystem 50 and the screw holder of the screwdriver carries the screws to corresponding screw holes of the target workpiece, or the screw feeding subsystem 40 arranges the required various screws in preset positions and the robot subsystem 20 operates the screwdriver to take the screws out of the screw feeder by means of the pull of vacuum or a magnetic drill bit under the control of the control subsystem 50.

The control subsystem 50 is configured to control the vision subsystem's acquiring an image of a target workpiece, recognize the image of the target workpiece to obtain tooling information including positions of screw holes, generate robot control parameters including actual screw hole information and process parameters (for example, torque) according to the tooling information, and control the robot subsystem's, the screw feeding subsystem's and the screwdriver subsystem's cooperatively working according to the robot control parameters. The screw hole information may include the installation sequence of screws, screw pattern (namely, screw type), positions of screw holes (for example, coordinate position of each screw hole) and screw hole sizes (namely, corresponding screw sizes).

In the embodiments of the present invention, the image of the target workpiece may be recognized in a plurality of ways to obtain tooling information. For example, template matching technology or deep learning technology may be adopted. In the following example, template matching technology is adopted for image recognition. The control subsystem 50 first acquires a process file containing tooling related part information (for example, screw hole information involved in screw fastening), process parameters and part templates (for example, screw hole templates). The process file may be exported from a pre-obtained production file corresponding to the original design, and for example, the production file may be a CAD file or a CAM file. Production process information including part information (for example, screw hole information), process parameters and part templates (for example, screw hole templates) is extracted from the production file and the production process information is exported to the process file, or the process file may be a received process file manually input by the user. For example, when no production file suitable for an automatic conversion is available, the user may input a process file of his own accord. The process file is matched against and associated with the actually captured workpiece image to finally generate actual control programs and parameters during the part assembly by a robot. After that, part (for example, screw hole) matching is performed in turn between part templates (for example, screw hole templates) and the image of the target workpiece in turn, the correspondence between the part position (for example, position of a screw hole) in the process file and the part position (for example, position of a screw hole) of the target workpiece is established to obtain tooling information after the matching degree meets the requirement, and robot control parameters including actual part information (for example, screw hole information) and process parameters are generated according to the obtained tooling information. In the specific implementation, the robot control parameters may have a plurality of implementation modes. For example, a current processing file recording the robot control parameters is generated, and then the robot subsystem 20 or related devices (for example, the screw feeding subsystem 40 and the screwdriver subsystem 30) are controlled to cooperatively work according to the current processing file. For example again, difference information (for example, if a screw has already been mounted in a screw hole or some screw holes and no screw needs to be mounted therein, the mounting of a screw may be skipped) between actual part information (for example, screw hole information) and part information in the process file (for example, screw hole information) is determined according to the obtained tooling information, the conversion relationship between the part coordinates (for example, screw hole coordinates) in the process file and actual part coordinates (for example, screw hole coordinates) is established, the difference information and the conversion relationship are recorded, and then the robot subsystem 20 or related devices (for example, the screw feeding subsystem 40 and the screwdriver subsystem 30) are controlled to cooperatively work in combination with the part information (for example, screw hole information) and process parameters in the process file.

When part matching is performed between part templates and the target workpiece, the normalized cross correlation (NCC) algorithm for part positioning may be adopted. The algorithm is a grey value based algorithm. The algorithm is usually realized by deducting the mean values and dividing by the standard variances. The mutual relationship between a part template t(x,y) and a sub-image f(x,y) in a target workpiece can be denoted as Formula (1):

$$NCC = \frac{1}{n-1} \sum_{x,y} \frac{(f(x,y) - \mu f)(t(x,y) - \mu t)}{\sigma f \cdot \sigma t} \qquad (1)$$

wherein, the symbols are respectively defined as follows:

n: number of pixels of a part template image;
f(x,y): grey value of each pixel in a target workpiece image;
t(x,y): grey value of each pixel in a part template image;
$\mu f$: mean value of grey values of pixels in a target workpiece image;
$\mu t$: mean value of grey values of pixels in a part template image; of: variance of grey values of pixels in a target workpiece image;
at: variance of grey values of pixels in a part template image. Generally speaking, shape-based template matching is sufficient to position a part. However, some parts have already been mounted. For example, screws have been mounted in some screw holes in the applications of screw fastening. In this case, the NCC algorithm may be used to rule out mounted parts, for example, screw holes fixed by use of screws.

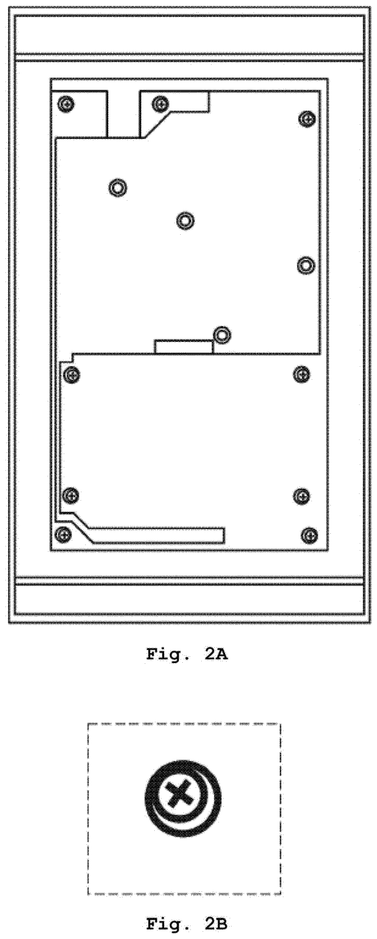

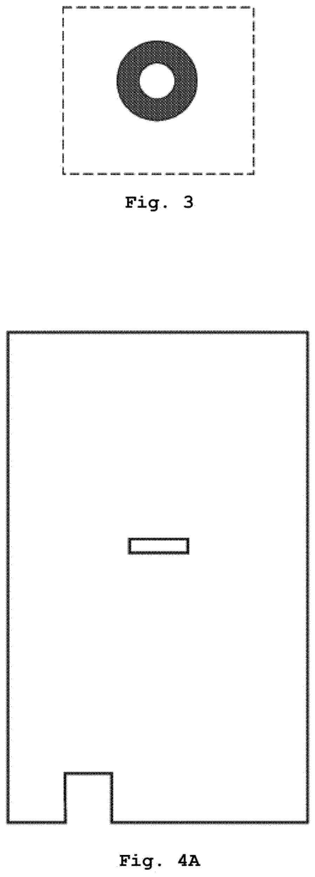

For example, Fig. 2A is a simplified schematic diagram of an image of a target workpiece in an example of the present invention where the tooling operation is screw fastening. Since details such as screw holes and screws on an image with a low resolution are possibly unclear, features are highlighted in this document and a simplified schematic diagram of the original image is obtained in order to make the features more obvious. When screw holes are positioned for the image of a target workpiece in Fig. 2A, if the screw hole template shown in Fig. 3 is used for matching, then a screw hole already fixed by use of a screw in Fig. 2B may be ruled out of the workpiece shown in Fig. 2A. Accordingly, the screw hole may be ruled out of the robot control parameters and screw fastening in the screw hole may be skipped in an actual installation.

After a part (for example, screw hole) is positioned, the part (for example, screw hole) in the image of the target workpiece may be matched against the part (for example, screw hole) in the process file. For example, the rotating vector and translation vector of the model in the image of the target workpiece may be obtained after the step of part (for example, screw hole) recognition. Then, the rotating vector and the translation vector are combined to establish a corresponding transformation T between a model frame and an image frame. Part (for example, screw hole) matching in the model framework may be calculated by use of the T matrix and the coordinates in the image, as shown in Formula (2):

$$\begin{bmatrix} X_{model} \\ Y_{model} \\ Z_{model} \\ 1 \end{bmatrix} = T \bullet \begin{bmatrix} X_{pic} \\ Y_{pic} \\ Z_{pic} \\ 1 \end{bmatrix} \qquad\qquad (2)$$

When there are a plurality of types of workpiece, there will be a plurality of types of process files accordingly. In this case, each process file may be stored in a process library and each process file may further contain workpiece information, which may include types and names of workpiece and design related information. In addition, workpiece type templates corresponding to different target workpieces may be pre-stored in the process library.

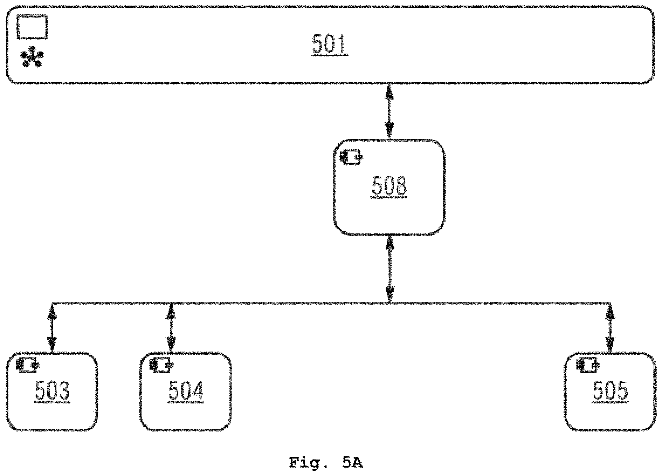

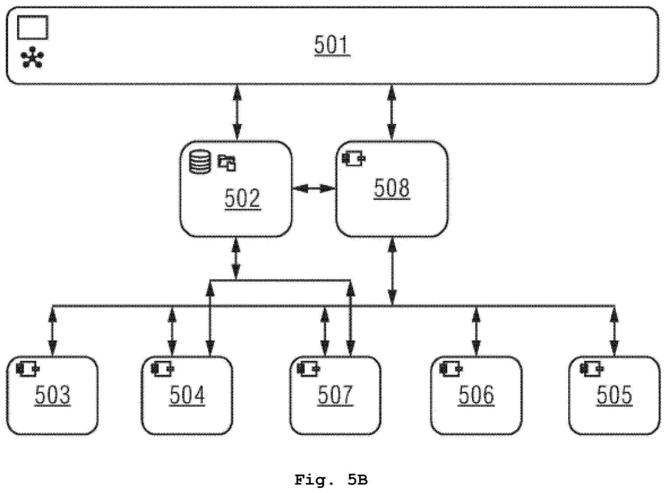

For example, for different types of PCB workpieces, workpiece type templates based on shape matching may be prepared by use of PCB outlines and some marks, for example, gaps, holes, cross marks or dot marks, on the PCBs. Figs. 5A and 5B show two PCB type templates, respectively. The PCB workpiece type templates are prepared by use of information such as the outline shape of the PCB workpiece, the gap on the outline and the central hole in the PCB workpiece.

In order to improve the matching speed in specific matching, the image pyramid method may be adopted. For example, the image pyramid is divided into 3 or more levels, and the image with the lowest resolution and in the smallest size, namely, the top of the pyramid, is first searched. If the search succeeds at this stage, the image with a high resolution and in a larger size at the lower level is searched, and so on, until the image in the original image size at the bottom of the pyramid is searched. Zooming of a model may be anisotropic. This means that the row zooming factor and the column zooming factor are possibly different. A model established according to the image of a workpiece type template may contain a point of a set of X-Y coordinates: $PT_i=(X^T_i, Y^T_i)$, and the gradient in the X and Y directions is $G^T_i=(Gx^T_i, Gy^T_i)$, wherein $i=1...n$. The superscript T represents a workpiece type template and the subscript i represents the serial number of a point. A small-scale step and a rotation angle step may be set for the model to avoid any matching in an image. During matching, the model of a workpiece type template may be compared with an image of a target workpiece in all positions by use of similarity measurement. The gradient of each point in the image of the target workpiece is $G^S_{u,v}=(Gx^S_{u,v}, Gy^S_{u,v})$, wherein the subscripts u and v represent the horizontal coordinate and the longitudinal coordinate in the image of the target workpiece, respectively, and the superscript S represents the image of the target workpiece. The idea of similarity measurement is that the sum of all normalized dot products of the gradient vectors of images of workpiece type templates is taken to search the images of all points in a model data set. A fraction will be generated at each point in the image of the target workpiece. The similarity measurement function is shown in Formula (3):

$$S_{u,v} = \frac{1}{n} \sum_{i=1}^{n} \frac{(Gx_i^T \bullet Gx_{(u+Xi,v+Yi)}^S) + (Gy_i^T \bullet Gy_{(u+Xi,v+Yi)}^S)}{\sqrt{Gx_i^{T^2} + Gy_i^{T^2}} \bullet \sqrt{Gx_{(u+Xi,v+Yi)}^{T^2} + Gy_{(u+Xi,v+Yi)}^{T^2}}} \qquad (3)$$

If the model of a workpiece type template exactly matches the image of the target workpiece, 1 will be returned for the function. A fraction corresponds to the part of visible objects in the image of the target workpiece. If no objects in the workpiece type template are in the image of the target workpiece, then the fraction obtained after matching is 0.

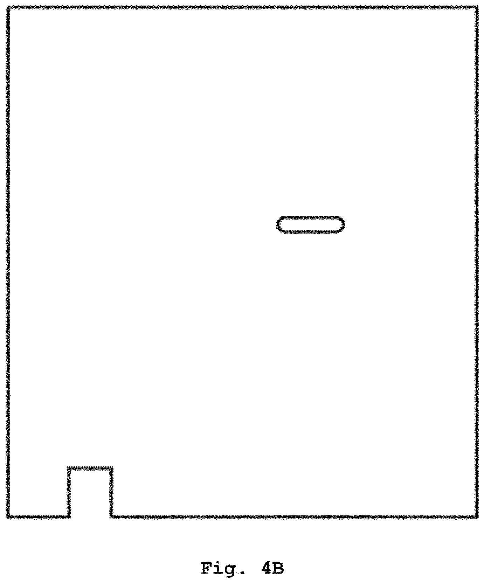

For example, when the image of the PCB workpiece in Fig. 2A is matched against the PCB workpiece type template in Figs. 4A and 4B, the image matches the workpiece type template in Fig. 4A, then the workpiece type of the target workpiece is determined, then the process file corresponding to the workpiece type is searched according to the workpiece information in the process files in the process library, and screw hole matching is performed between the screw hole templates in the process file and the image of the target workpiece in turn.

The robot subsystem 20, the screw feeding subsystem 40 and the screwdriver subsystem 30 are controlled to cooperatively work according to the robot control parameters. Specifically, for example, according to the installation sequence of screws, screw pattern, positions of screw holes, screw hole sizes and process parameters in the robot control parameters, the screw feeding subsystem 40 is controlled to supply the screws in corresponding patterns and sizes to corresponding positions, the robot subsystem 20 is controlled to move the screwdriver to a corresponding position, and the screwdriver subsystem 30 is controlled to start/stop the screwdriver and fasten screws with a corresponding torque, and the quality during screw fastening is monitored.

In the specific implementation, the control subsystem 50 may be made up of a communication switch and/or a computer (for example, PC) and/or a programmable logic controller (PLC) and/or an embedded computing device and/or any suitable computing device. These devices jointly control the above-mentioned subsystems to guarantee that the screw fastening system functions normally. Since the main peripheral device is connected with a control device over Ethernet or any other communication bus, a communication switch is used to extend the number of communication ports in the control subsystem 50. The PLC is usually used for digital I/O control of a peripheral device to guarantee the reliability and real-time nature of the control of the whole system. However, major control functions such as image acquisition, image processing and general control logic may be completed by an industrial computer/PC/embedded computing device. The central computing unit should be strong enough to complete all computing tasks.

In the specific implementation, the control subsystem 50 may have a plurality of implementation modes, and Fig. 5A is a schematic diagram of the structure of the control subsystem 50 in an example. As shown in Fig. 5A, the control subsystem may comprise: an image acquisition module 503, an image processing module 504, a robot control module 505 and a process management module 508. In some implementation modes, the control subsystem may further comprise a user interface 501.

The image acquisition module 503 is configured to control a vision subsystem's acquiring an image of a target workpiece arranged on a workbench.

The image processing module 504 is configured to recognize the image of the target workpiece to obtain tooling information.

The robot control module 505 is configured to control a robot subsystem's performing a corresponding tooling operation.

The process management module 508 is configured to control a vision subsystem's acquiring an image of a target workpiece by invoking the image acquisition module 503, recognize the image of the target workpiece by invoking the image processing module 504, plan corresponding robot control parameters according to the obtained tooling information, and control the robot subsystem's performing a corresponding tooling operation according to the robot control parameters by invoking the robot control module 505.

The user interface 501 is configured to display the working state of the vision-based autonomous robot tooling control system during running.

For different tooling applications, the control subsystem 50 may have different structures to be implemented. For example, if the tooling operation is screw fastening, the control subsystem 50 may comprise a user interface 501, a process library 502, an image acquisition module 503, an image processing module 504, a robot control module 505, a screw feeding control module 506, a screwdriver control module 507 and a process management module 508, as shown in Fig. 5B.

The user interface 501 is configured to display the working state of the screw fastening system during running. When a system error occurs during the running of the system, the user may intervene with and adjust the screw fastening procedure through the user interface. The user interface 501 is further configured to provide an interface for inputting and editing workpiece information and process information in the process library 502.

The image acquisition module 503 is configured to control the vision subsystem 10's camera's acquiring an image of a target workpiece arranged on a workbench and acquire the target workpiece's real-time image acquired by the camera. In the embodiments of the present invention, the number and the type of cameras which the vision subsystem 10 comprises are configurable.

The image processing module 504 is configured to further process the target workpiece's real-time image acquired by the image acquisition module 503, including image recognition and screw hole positioning. For example, workpiece information may be identified and all screw holes on the workpiece may be positioned by use of the real-time image and the data stored in the process library 502. Specifically, the workpiece type of the target workpiece may be determined according to the real-time image of the target workpiece and the workpiece type template pre-stored in the process library 30, the process file corresponding to the workpiece type is searched in the process library according to workpiece information in different process files in the process library 30, screw hole matching is performed between the screw hole templates in the process file and the image of the target workpiece in turn, and correspondences between the positions of screw holes in the process file and the positions of screw holes of the target workpiece are established after the matching degree meets the requirement.

The robot control module 505 is configured to control the movement of a robot according to the preset coordination and posture and monitor the state of the robot. For example, the robot control module controls the robot subsystem's 20 moving a screwdriver mounted on the operating end of the robot subsystem 20 to each target position. Specifically, the robot control module controls the robot subsystem's 20 moving the screwdriver to corresponding positions according to the installation sequence of screws and positions of screw holes in the robot control parameters. In addition, the robot control module 505 may also be configured according to the actual robot used in the system.

The screw feeding module 506 supports a multifunctional device corresponding to different screw feeding modes, for example, an automatic screw feeding system or a suction/magnetic screwdriver. The screw feeding module 506 ensures that a screw can be correctly fed to the tip of the screwdriver before the screw is finally screwed in. For the automatic screw feeding system, the screw feeding subsystem 40 may be controlled to supply screws in corresponding patterns and sizes to corresponding positions, for example, through a hose, according to the installation sequence of screws and the screw pattern in the robot control parameters. For the screw feeding mode of the suction/magnetic screwdriver, screws may be supplied to preset positions and then the screwdriver draws corresponding screws therefrom.

The screwdriver control module 507 is configured to control the driving component of the screwdriver subsystem 30 so that the driving component controls the start, stop and torque of the screwdriver, and monitor whether the screw fastening operation is smooth.

The process management module 508 is configured to control the vision subsystem 10's acquiring an image of a target workpiece by invoking the image acquisition module 503, perform further processing, including image recognition and screw hole positioning, of the target workpiece's real-time image acquired by the image acquisition module 503 by invoking the image processing module 504, and plan robot control parameters including actual screw hole information and process parameters. The process management module 508 is further configured to, according to the robot control parameters, control a robot subsystem's 20, a screw feeding subsystem's 40 and a screwdriver subsystem's 30 cooperatively working to fasten screws at designated screw hole coordinates in accordance with screw fastening process parameters by invoking the robot control module 505, the screw feeding control module 506 and the screwdriver control module 507.

In other implementation modes, the process management module 508 may be further configured to acquire a process file and store the process file in a process library 502, wherein the process file contains part information (for example, screw hole information), process parameters and part templates (for example, screw hole templates). For example, the process management module 508 may first acquire a production file corresponding to the original design, extract production process information including part information (for example, screw hole information), process parameters and part templates (for example, screw hole templates) from the production file, and export the production process information to a process file, or the process management module 508 may first receive a process file provided by the user and containing part information (for example, screw hole information), process parameters and part templates (for example, screw hole templates). In one implementation mode, the user may enter the process file through the user interface 501. Accordingly, when recognizing an image, the image processing module 504 may perform part matching (for example, screw hole matching) between part templates (for example, screw hole templates) in the process file and the image of the target workpiece in turn. The image processing module establishes a correspondence between the part position (for example, position of a screw hole) in the process file and the part position (for example, position of a screw hole) of the target workpiece after the matching degree meets the requirement.

In another implementation mode, predetermined workpiece type templates are further stored in the process library 502, and the process file further contains workpiece information including workpiece type. Accordingly, the image process module 504 first performs image recognition and matching between the workpiece type templates in the process library and the image of the target workpiece, determines the type of the target workpiece according to the matching result, extracts the workpiece type in the workpiece information and the process file corresponding to the type of the target workpiece from the process library 502 according to the type of the target workpiece and then performs part matching (for example, screw hole matching) between the part templates (for example, screw hole templates) in the extracted process file and the image of the target workpiece in turn.

The vision-based autonomous robot tooling system in the embodiments of the present invention has been described in detail above, and the vision-based autonomous robot tooling control method in the embodiments of the present invention will be described in detail below. The vision-based autonomous robot tooling control method in the embodiments of the present invention can be realized in the screw fastening system in the embodiments of the present invention. For details not disclosed in the embodiments of the method of the present invention, refer to the corresponding description in the embodiments of the system of the present invention. These details will not be described here again.

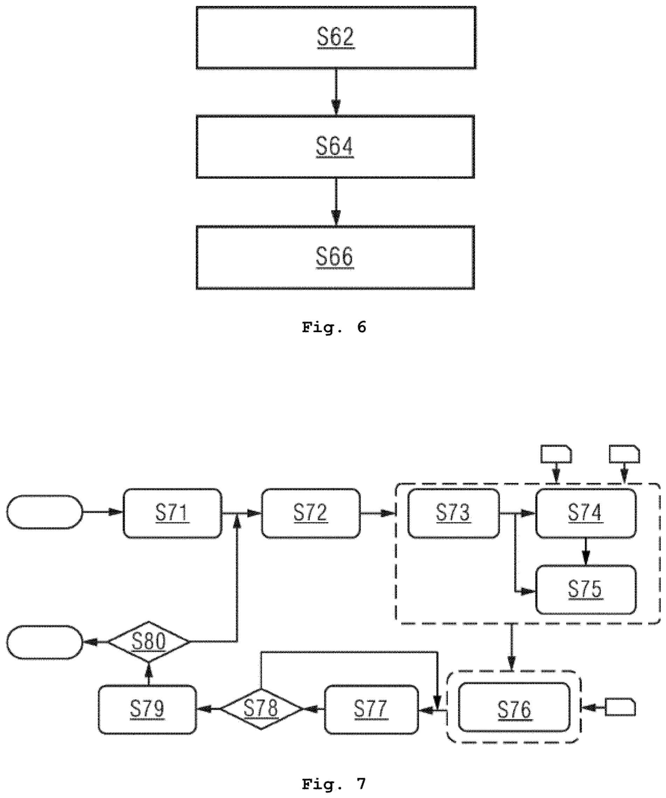

Fig. 6 is an exemplary flowchart of the vision-based autonomous robot tooling control method provided in the embodiments of the present invention. As shown in Fig. 6, the method may comprise the following steps:

S62. Control a vision subsystem's acquiring an image of a target workpiece.

S64. Recognize the image of the target workpiece and plan corresponding robot control parameters according to the obtained tooling information.

In this step, if the tooling operation is screw fastening, the image of the target workpiece may be recognized to obtain tooling information including positions of screw holes, and robot control parameters including screw hole information and process parameters may be generated according to the tooling information.

S66. Control a robot subsystem's performing a corresponding tooling operation according to the robot control parameters.

In this step, if the tooling operation is screw fastening, a robot subsystem, a screw feeding subsystem and a screwdriver subsystem may be controlled according to the robot control parameters to cooperatively work to fasten screws at designated screw hole coordinates in accordance with screw fastening process parameters.

The robot subsystem is configured to control an operating end's performing a corresponding tooling operation. If the tooling operation is screw fastening, the robot subsystem is configured to move a screwdriver mounted on the operating end of the robot subsystem to each target position, the target positions include corresponding positions of screw holes of the target workpiece, the screwdriver subsystem comprises a screwdriver mounted on the operating end of the robot subsystem and a driving component configured to drive the screwdriver, the driving component is able to control start/stop of the screwdriver and screw fastening with a corresponding torque, and the screw feeding subsystem is configured to supply a screw to a corresponding position.

In one implementation mode, the method further comprises: acquiring a process file and storing the process file in a process library, wherein the process file contains part information (for example, screw hole information), process parameters and part templates (for example, screw hole templates). Accordingly, recognizing the image of the target workpiece in step S64 comprises: performing part matching (for example, screw hole matching) between the part templates (for example, screw hole templates) in the process file and the image of the target workpiece in turn, and establishing a correspondence between the part position (position of a screw hole) in the process file and the part position (for example, position of a screw hole) of the target workpiece and generating robot control parameters including part information (for example, screw hole information) and process parameters after the matching degree meets the requirement.

In one implementation mode, predetermined workpiece type templates are further stored in the process library, the process file further contains workpiece information including workpiece type, and accordingly, before performing part template matching (for example, screw hole template matching) between part templates (for example, screw hole templates) in the process file and the image of the target workpiece in turn in step S64, the method further comprises: performing image recognition and matching between the workpiece type templates in the process library and the image of the target workpiece, determining the type of the target workpiece according to the matching result, and extracting the workpiece type in the workpiece information and the process file corresponding to the type of the target workpiece from the process library according to the type of the target workpiece.

The process file may be a process file generated after production process information including part information (for example, screw hole information), process parameters and part templates (for example, screw hole templates) is extracted from the production file corresponding to the original design, or a process file entered by a user and containing part information (for example, screw hole information), process parameters and part templates (screw hole templates).

Fig. 7 is an exemplary flowchart of the vision-based autonomous robot tooling control method in an embodiment of the present invention, wherein the tooling operation is screw fastening. As shown in Fig. 7, the method may comprise the following steps:

S71. Initialize the screw fastening system shown in Fig. 1.

S72. Arrange a target workpiece on the workbench, namely, load a material.

S73. Control a vision subsystem's acquiring an image of the target workpiece.

S74. Utilize workpiece type templates to perform workpiece type recognition for the image of the target workpiece. Workpiece type templates may be pre-stored in a process library. Thus, in step S74, workpiece type templates extracted from the process library may be matched against the image of the target workpiece. S75. Utilize the corresponding process file to perform screw hole positioning for the image of the target workpiece. The process file may be exported from a generated file in advance and stored in the process library. Thus, in step S74, screw hole templates in installation positions may be matched against the image of the target workpiece in turn according to the corresponding process file extracted from the process library according to the target workpiece type determined in step S74. S76. Generate robot control parameters including screw hole information and process parameters according to the results of image recognition and screw hole positioning.

S77. According to the robot control parameters, control a robot subsystem's, a screw feeding subsystem's and a screwdriver subsystem's cooperatively working to fasten a screw at designated screw hole coordinates in accordance with screw fastening process parameters.

S78. Determine whether all screw holes have been fastened by use of screws, and if yes, perform step S79, and otherwise, go back to perform step S77.

S79. Remove the target workpiece from the workbench, namely, unload the material.

S80. Determine whether all workpiece fastening tasks have been completed, and if yes, end, and otherwise, go back to perform step S72.

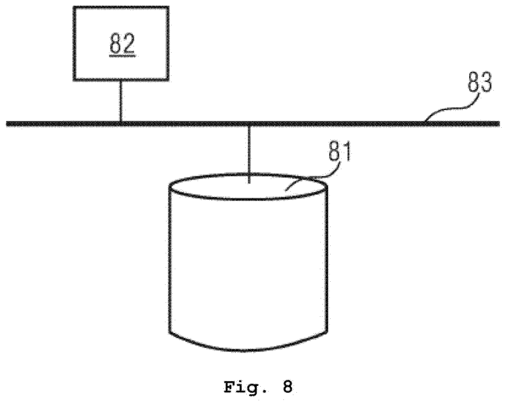

Fig. 8 exemplarily shows the structure of another vision-based autonomous robot tooling control system provided in the embodiments of the present invention. As shown in Fig. 8, the system may comprise at least one memory 81 and at least one processor 82. In addition, the system may further comprise other components, for example, a monitor and a communication port.

These components can communicate with each other through a bus 83.

At least one memory 81 is configured to store a computer program. In one implementation mode, the computer program may be interpreted as the modules of the vision-based autonomous robot tooling control system shown in Figs. 5A and 5B. In addition, at least one memory 81 may further store an operating system. The operating system includes but is not limited to an Android operating system, Symbian operating system, Windows operating system and Linux operating system.

At least one processor 82 is configured to invoke the computer program stored in at least one memory 81 to execute the vision-based autonomous robot tooling control method in the embodiments of the present invention. The processor 82 may be a central processing unit (CPU), a processing unit/module, an application specific integrated circuit (ASIC), a logic module or a programmable gate array. The processor may receive and send data through the communication port.

It should be noted that not all the steps or modules in the above-mentioned processes and structural diagrams are required, and some steps or modules may be omitted, depending on the actual requirements. The execution sequence of the steps is not fixed and may be adjusted as required. The partition of the modules is a functional partition for the convenience of description. In the practical implementation, the function of a module may be realized by a plurality of modules, and the functions of a plurality of modules may be realized by one module and these modules may be located in the same equipment or may be located in different equipment.

It should be understood that the hardware modules in different embodiments may be realized mechanically or electronically. For example, a hardware module may comprise specially designed permanent circuits or logic devices (for example, application-specific processors such as FPGA or ASIC) to complete specific operations. A hardware module may also comprise programmable logic devices or circuits (for example, general processors or other programmable processors) temporarily configured by software to perform specific operations. Whether a hardware module is realized mechanically, or by use of a dedicated permanent circuit or a temporarily configured circuit (for example, configured by software) can depend on the considerations of the cost and the time.

In addition, computer software executable on a server or server cluster or cloud platform is further provided in the embodiments of the present invention, and the computer software can be executed by a processor to realize the vision-based autonomous robot tooling control method in the embodiments of the present invention.

In addition, a computer-readable storage medium is further provided in the embodiments of the present invention, a computer program is stored in the storage medium and the computer program can be executed by a processor to realize the vision-based autonomous robot tooling control method in the embodiments of the present invention. Specifically, a system or device equipped with a storage medium may be provided. Software program codes which may realize the function in any of the above-mentioned embodiments are stored in the storage medium and the computer (or CPU or MPU) of the system or device may read and execute the program codes stored in the storage medium. In addition, through the commands based on the program codes, the operating system on the computer may complete a part of or all of practical operations. In addition, the program codes read out of the storage medium may be written into the memory in an expansion board in the computer or may be written into the memory in an expansion unit connected to the computer, and then the commands based on the program codes let the CPU installed on the expansion board or expansion unit execute a part or all of practical operations to realize the function in any of the above-mentioned embodiments. The storage medium used to provide program codes includes a floppy disk, hard disk, magneto-optical disk, optical disk (for example, CD-ROM, CD-R, CD-RW, DVD-ROM, DVD-RAM, DVD-RW, DVD+RW), magnetic tape, non-volatile memory card, and ROM. Alternatively, the program codes may be downloaded from the server computer over a communication network.

From the above-mentioned solution, it can be seen that an image of a target workpiece is acquired, the image of the target workpiece is recognized, actual robot control parameters are planned according to the recognition result, and then robots or related devices are controlled to cooperatively work to complete the autonomous assembly of a workpiece on a robot working platform according to the robot control parameters.

A process file containing part information, process parameters and part templates is utilized to perform a template-based image recognition and part positioning for the image of the target workpiece, and thus the accuracies of the image recognition and part positioning can be improved.

Further, workpiece type templates are preset to perform a workpiece type recognition for the image of the target workpiece, and thus in the case of a plurality of workpiece types, the autonomous assembly of different types of workpiece can flexibly be realized.

In addition, the export of a process file directly from a production file corresponding to the original design, for example, a CAD file, can simplify the workload of the user, improve the accuracy of information in the process file and avoid errors resulting from manual inputs.

The above-mentioned embodiments are only preferred embodiments of the present invention, but are not used to restrict the present invention. Modifications, equivalent replacements, and improvements made without departing from the spirit and principle of the present invention should all fall within the scope of protection of the present invention.

**Claims**

**1.** A vision-based autonomous robot tooling control system, **characterized in that** the system comprises:

an image acquisition module (503), configured to control a vision subsystem's acquiring an image of a target workpiece arranged on a workbench,
an image processing module (504), configured to recognize the image of the target workpiece to obtain tooling information,
a robot control module (505), configured to control a robot subsystem's performing a corresponding tooling operation, and
a process management module (508), configured to control a vision subsystem's acquiring an image of a target workpiece by invoking the image acquisition module (503), recognize the image of the target workpiece by invoking the image processing module (504),
plan corresponding robot control parameters according to the obtained tooling information, and control the robot subsystem's performing a corresponding tooling operation according to the robot control parameters by invoking the robot control module (505) .

**2.** The vision-based autonomous robot tooling control system as claimed in claim 1, **characterized in that** the tooling operation is screw assembly,

the image processing module (504) recognizes the image of the target workpiece to obtain tooling information, including positions of screw holes,
the robot control module (505) controls a robot subsystem's moving a screwdriver mounted on the operating end of the robot subsystem to each target position,
the system further comprises:

a screw feeding control module (506), configured to control a screw feeding subsystem's supplying a screw to a corresponding position, and
a screwdriver control module (507), configured to control the driving component of a screwdriver subsystem to realize the control of start/stop of the screwdriver and screw fastening with a corresponding torque, and
the process management module (508) controls a vision subsystem's acquiring an image of a target workpiece by invoking the image acquisition module (503), recognizes the image of the target workpiece to obtain tooling information including positions of screw holes by invoking the image processing module (504), plans robot control parameters including actual screw hole information and process parameters according to the tooling information, and according to the robot control parameters,
controls a robot subsystem's, a screw feeding subsystem's and a screwdriver subsystem's cooperatively working to fasten screws at designated screw hole coordinates in accordance with screw fastening process parameters by invoking the robot control module (505), the screw feeding control module (506) and the screwdriver control module (507).

**3.** The vision-based autonomous robot tooling control system as claimed in claim 1 or 2, **characterized in that** the system further comprises a user interface (501), configured to display the working state of the vision-based autonomous robot tooling control system during running.

**4.** The vision-based autonomous robot tooling control system as claimed in claim 1 or 2, **characterized in that** the process management module (508) is further configured to acquire a process file and store the process file in a process library (502), wherein the process file contains tooling related part information, process parameters and part templates, and

the image processing module (504) performs part matching between the part templates in the process file and the image of the target workpiece in turn, and establishes a correspondence between the part position in the process file and the part position of the target workpiece to obtain tooling information after the matching degree meets the requirement.

**5.** The vision-based autonomous robot tooling control system as claimed in claim 4, **characterized in that** predetermined workpiece type templates are further stored in the process library (502), the process file further contains workpiece information including workpiece type, and

the image process module (504) is further configured to perform image recognition and matching between the workpiece type templates in the process library (502) and the image of the target workpiece, determine the type of the target workpiece according to the matching result, extract the workpiece type in the workpiece information and the process file corresponding to the type of the target workpiece from the process library (502) according to the type of the target workpiece and then perform part matching between the part templates in the extracted process file and the image of the target workpiece in turn.

**6.** The vision-based autonomous robot tooling control system as claimed in claim 5, **characterized in that** the process management module (508) is further configured to acquire a production file corresponding to the original design, extract production process information including part information, process parameters and part templates from the production file, and export the production process information to a process file, or the process management module (508) is further configured to receive a process file entered by the user and containing part information, process parameters and part templates.

**7.** A vision-based autonomous robot tooling system, **characterized in that** the system comprises:

a vision subsystem (10), configured to acquire an image of a target workpiece arranged on a workbench,
a robot subsystem (20), configured to control an operating end's performing a corresponding tooling operation, and
a control subsystem (50), configured to control the vision subsystem's (10) acquiring an image of a target workpiece, recognize the image of the target workpiece, generate corresponding robot control parameters according to the obtained tooling information, and control the robot subsystem's (20) performing the corresponding tooling operation according to the robot control parameters.

**8.** The vision-based autonomous robot tooling system as claimed in claim 7, **characterized in that** the tooling operation is screw assembly,

the robot subsystem (20) is configured to move a screwdriver mounted on the operating end of the robot subsystem to each target position, wherein the target positions include corresponding positions of screw holes of the target workpiece, the system further comprises:

a screwdriver subsystem (30), comprising a screwdriver mounted on the operating end of the robot subsystem and a driving component configured to drive the screwdriver, the driving component being able to control start/stop of the screwdriver and screw fastening with a corresponding torque, and
a screw feeding subsystem (40), configured to supply a screw to a corresponding position, and
the control subsystem (50) is configured to control the vision subsystem's (10) acquiring an image of a target workpiece,
recognize the image of the target workpiece to obtain tooling information including positions of screw holes, generate robot control parameters including actual screw hole information and
process parameters according to the tooling information, and
control the robot subsystem's (20), the screw feeding subsystem's (30) and the screwdriver subsystem's (40) cooperatively working according to the robot control parameters.

**9.** The vision-based autonomous robot tooling system as claimed in claim 7 or 8, **characterized in that** the vision subsystem (10) comprises a camera arranged above the workbench and/or a camera arranged on the operating end side of the robot subsystem (20), and

when the vision subsystem (10) comprises a camera arranged on the operating end side of the robot subsystem (20), the control subsystem (50) is further configured to control the robot subsystem's (20) moving the camera arranged on the operating end side of the robot subsystem (20) to each target position.

**8.** The vision-based autonomous robot tooling system as claimed in claim 6, **characterized in that** the control subsystem (50) is the vision-based autonomous robot tooling control system as claimed in any of Claims 1 to 6.

**10.** A vision-based autonomous robot tooling control method, **characterized in that** the method comprises:

controlling a vision subsystem's acquiring an image of a target workpiece (S62),
recognizing the image of the target workpiece and planning corresponding robot control parameters according to the obtained tooling information, and
controlling a robot subsystem's performing a corresponding tooling operation according to the robot control parameters, wherein, the robot subsystem is configured to control an operating end's performing a corresponding tooling operation.

**11.** The vision-based autonomous robot tooling control method as claimed in claim 10, **characterized in that** the tooling operation is screw assembly,

recognizing the image of the target workpiece and planning corresponding robot control parameters according to the obtained tooling information comprises: recognizing the image of the target workpiece to obtain tooling information including positions of screw holes and generating robot control parameters including screw hole information and process parameters according to the tooling information (S64), and
controlling a robot subsystem's performing a corresponding tooling operation according to the robot control parameters comprises: according to the robot control parameters, controlling a robot subsystem's, a screw feeding subsystem's and a screwdriver subsystem's cooperatively working to fasten screws at designated screw hole coordinates in accordance with screw fastening process parameters (S66),
wherein, the robot subsystem is configured to move a screwdriver mounted on the operating end of the robot subsystem to each target position, the target positions include corresponding positions of screw holes of the target workpiece, the screwdriver subsystem comprises a screwdriver mounted on the operating end of the robot subsystem and a driving component configured to drive the screwdriver, the driving component is able to control start/stop of the screwdriver and screw fastening with a corresponding torque, and the screw feeding subsystem is configured to supply a screw to a corresponding position.

**12.** The vision-based autonomous robot tooling control method as claimed in claim 10 or 11, **characterized in that** the method further comprises acquiring a process file and storing the process file in a process library, wherein the process file contains tooling related part information, process parameters and part templates, and
recognizing the image of the target workpiece comprises:

performing part matching between the part templates in the process file and the image of the target workpiece in turn, and
establishing a correspondence between the part position in the process file and the part position of the target workpiece to obtain tooling information after the matching degree meets the requirement.

**13.** The vision-based autonomous robot tooling control method as claimed in claim 12, **characterized in that** predetermined workpiece type templates are further stored in the process library, the process file further contains workpiece information including workpiece type, and
before performing screw hole matching between screw hole templates in the process file and the image of the target workpiece in turn, the method further comprises: performing image recognition and matching between the workpiece type templates in the process library and the image of the target workpiece, determining the type of the target workpiece according to the matching result, and extracting the workpiece type in the workpiece information and the process file corresponding to the type of the target workpiece from the process library according to the type of the target workpiece.

**14.** The vision-based autonomous robot tooling control method as claimed in claim 12, **characterized in that** the process file is a process file generated after production process information including part information, process parameters and part templates is extracted from the production file corresponding to the original design, or a process file entered by the user and containing part information, process parameters and part templates.

**15.** A vision-based autonomous robot tooling control system, **characterized in that** the system comprises at least one memory (71) and at least one processor (72), wherein

the at least one memory (71) is configured to store a computer program, and
the at least one processor (72) is configured to invoke the computer program stored in the at least one memory (71) to execute the vision-based autonomous robot tooling control method as claimed in any of claims 10 to 14.

**16.** A computer-readable storage medium, storing a computer program, **characterized in that** the computer program can be executed by a processor to realize the vision-based autonomous robot tooling control method as claimed in any of claims 10 to 14.

Fig. 1A

Fig. 1B

Fig. 2A

Fig. 2B

Fig. 3

Fig. 4A

Fig. 4B

Fig. 5A

Fig. 5B

```
┌─────────────────────────┐
│          S62            │
└─────────────────────────┘
             │
             ▼
┌─────────────────────────┐
│          S64            │
└─────────────────────────┘
             │
             ▼
┌─────────────────────────┐
│          S66            │
└─────────────────────────┘
```

Fig. 6

```
  ┌──────┐      ┌──────┐      ┌──────┐       ┌──────┐     ┌──────┐
  │      │─────▶│ S71  │─────▶│ S72  │──────▶│ S73  │────▶│ S74  │
  └──────┘      └──────┘      └──────┘       └──────┘     └──────┘
                                                            │
                                                          ┌──────┐
                                                          │ S75  │
                                                          └──────┘

  ┌──────┐     ┌──────┐     ┌──────┐    ┌──────┐    ┌──────┐
  │      │◀────│ S80  │◀────│ S79  │◀───│ S78  │◀───│ S77  │◀───│ S76 │
  └──────┘     └──────┘     └──────┘    └──────┘    └──────┘    └──────┘
```

Fig. 7

Fig. 8

## INTERNATIONAL SEARCH REPORT

| International application No. |
|---|
| **PCT/CN2019/105438** |

**A.   CLASSIFICATION OF SUBJECT MATTER**

B25J 9/16(2006.01)i;  B23P 19/06(2006.01)i

According to International Patent Classification (IPC) or to both national classification and IPC

**B.   FIELDS SEARCHED**

Minimum documentation searched (classification system followed by classification symbols)

B25J; B23P

Documentation searched other than minimum documentation to the extent that such documents are included in the fields searched

Electronic data base consulted during the international search (name of data base and, where practicable, search terms used)

CNABS; CNTXT; CNKI; VEN; EPTXT; WOTXT; USTXT: 机器人, 机械手, 锁付, 锁附, 螺丝, 控制, 图像, 工艺, 模板, robot, screw, control+, imag+, mould

**C.   DOCUMENTS CONSIDERED TO BE RELEVANT**

| Category* | Citation of document, with indication, where appropriate, of the relevant passages | Relevant to claim No. |
|---|---|---|
| X | CN 108312144 A (BEIJING AEROSPACE MEASUREMENT & CONTROL TECHNOLOGY CO., LTD.) 24 July 2018 (2018-07-24)<br>    description paragraphs [0033]-[0092], figures 1-3 | 1-17 |
| A | CN 104259839 A (SICHUAN CHANGHONG ELECTRIC CO., LTD.) 07 January 2015 (2015-01-07)<br>    entire document | 1-17 |
| A | CN 102909548 A (GUILIN UNIVERSITY OF ELECTRONIC TECHNOLOGY) 06 February 2013 (2013-02-06)<br>    entire document | 1-17 |
| A | JP 2003225837 A (NITTO SEIKO K. K.) 12 August 2003 (2003-08-12)<br>    entire document | 1-17 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 April 2020** | **02 June 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

| | International application No. |
|---|---|
| | **PCT/CN2019/105438** |

| Patent document cited in search report | | | Publication date (day/month/year) | Patent family member(s) | | | Publication date (day/month/year) |
|---|---|---|---|---|---|---|---|
| CN | 108312144 | A | 24 July 2018 | None | | | |
| CN | 104259839 | A | 07 January 2015 | None | | | |
| CN | 102909548 | A | 06 February 2013 | CN | 102909548 | B | 16 December 2015 |
| JP | 2003225837 | A | 12 August 2003 | None | | | |

Form PCT/ISA/210 (patent family annex) (January 2015)